# EUROPÄISCHE PATENTSCHRIFT

(11) **EP 3 645 899 B1**
(45) Veröffentlichungstag und Bekanntmachung des Hinweises auf die Patenterteilung: **07.07.2021**
(21) Anmeldenummer: 18728888.1
(22) Anmeldetag: 04.06.2018
(51) Int. Cl.: F16B 43/00

(54) **VERFÜLLSYSTEM UND BEFESTIGUNGSANORDNUNG ZUM VERFÜLLEN VON LANGLOCHARTIGEN AUSSPARUNGEN**
FILLING SYSTEM AND FIXING ARRANGEMENT FOR FILLING SLOT-LIKE RECESSES
SYSTÈME DE REMPLISSAGE ET ENSEMBLE DE FIXATION POUR LE REMPLISSAGE D'ÉVIDEMENTS DU TYPE TROU OBLONG

(30) Priorität: 26.06.2017 DE 102017114124
(43) Veröffentlichungstag der Anmeldung: 06.05.2020
(73) Patentinhaber: fischerwerke GmbH & Co. KG, 72178 Waldachtal (DE)
(72) Erfinder: HACKER, Oliver, 72227 Egenhausen (DE); HAGENLOCHER, Annika, 72178 Waldachtal (DE)
(86) Internationale Anmeldenummer: PCT/EP2018/064557
(87) Internationale Veröffentlichungsnummer: WO 2019/001899

(56) Entgegenhaltungen:
- EP-A1- 0 774 587
- DE-A1-102010 037 755
- US-A- 4 932 805

## Beschreibung

Die Erfindung betrifft ein Verfüllsystem zum Befüllen von langlochartigen Aussparungen mit den Merkmalen des Oberbegriffs des Anspruchs 1. Des Weiteren betrifft die Erfindung eine Befestigungsanordnung mit einem derartigen Verfüllsystem an einer langlochartigen Aussparung eines Anbauteils.

Aus der Druckschrift EP 0 774 587 B1 ist eine Befestigungsanordnung bekannt, bei der ein Langloch in einem Anbauteil, welches an einem Untergrund, hier eine Platte, zu befestigen ist, mit einer fließfähigen, aushärtbaren Masse befüllt wird. Das Anbauteil wird mit einem Befestigungselement, hier einer Schraube, die durch das Langloch ragt, befestigt. Zum Befüllen des Raums zwischen Schraube und Wandung des Langlochs, also zum Ausfüllen des Langlochs, wird ein Verfüllsystem verwendet, das in seiner Form mit der Form des Langlochs korrespondiert und das am Schaft der Schraube angeordnet ist. Eine auf dem Schraubengewinde angeordnete Mutter verspannt das Verfüllsystem gegen das Anbauteil und den Untergrund. Anschließend wird durch vorhandene Öffnungen und Kanäle in dem Verfüllsystem die fließfähige, aushärtbare Masse in das zu befüllende Langloch eingebracht.

Aufgabe der Erfindung ist es, ein alternatives Verfüllsystem zum Ausfüllen von langlochartigen Aussparungen vorzuschlagen, das einfach zu montieren ist und zudem durch geringen Materialaufwand realisiert werden kann. Des Weiteren ist es Aufgabe der Erfindung, eine Befestigungsanordnung vorzuschlagen, durch welche ein Verfüllen von langlochartigen Aussparungen ermöglicht wird.

Diese Aufgaben werden erfindungsgemäß durch die Merkmale des Verfüllsystems gemäß Anspruch 1 sowie durch die Merkmale der Befestigungsanordnung gemäß Anspruch 9 gelöst. Die Erfindung schlägt ein Verfüllsystem vor, mit welchem eine langlochartige Aussparung in einem Anbauteil, welches an einem Untergrund befestigt ist, mit einer fließfähigen, aushärtbaren Masse verfüllt werden kann. Bei dem Anbauteil kann es sich beispielsweise um eine stahlträger- oder stahlplattenartige Konstruktion, insbesondere um eine sogenannte Kopfplatte handeln, die an einem horizontal, vertikal oder generell schräg orientierten und zumindest teilweise planen Untergrund befestigt ist. Dem Fachmann ist klar, dass auch ein derartiges Anbauteil, welches nicht aus Metall besteht, an einem Untergrund befestigt werden kann. Wichtig hierbei ist nur, dass das zu befestigende Anbauteil aus einem oder mehreren Materialien besteht, welche eine gewisse Festigkeit aufweisen. Hierfür sind auch Materialien wie beispielsweise Stein, Kunststoff oder Holz vorstellbar. Die Aufführung der genannten Materialien soll hier nur als beispielhaft angesehen werden. Zur Befestigung des Anbauteils ist ein Befestigungselement vorgesehen, das im Untergrund befestigt ist und um eine gewisse Länge über die Oberfläche des Untergrunds herausragt. Dieses Befestigungselement ist insbesondere eine Betonschraube oder derart gestaltet, dass eine erste Befestigungselementseite, welche im Untergrund befestigt ist, die Fähigkeit hat, aufzuspreizen oder auf sonstige Weise im Untergrund befestigt zu werden. Hierzu zählt auch die Befähigung, eine Befestigung im Untergrund durch eine fließfähige, aushärtbare Masse, wie beispielsweise Injektionsmörtel, zu ermöglichen. Eine zweite Befestigungselementseite, die über die Oberfläche des Untergrunds hinausragt, weist insbesondere einen Gewindeteil und eine darauf angeordnete Mutter auf. Diese Ausgestaltung des Befestigungselements ist beispielhaft. Auch kann das Befestigungselement als handelsübliche Gewindestange, Hülsen- oder Bolzenanker ausgestaltet sein. Zur Befestigung des Anbauteils am Untergrund weist das Anbauteil eine das Anbauteil gänzlich durchbrechende langlochartige Aussparung auf. Diese langlochartige Aussparung dient als Aufnahme für das im Untergrund befestigte Befestigungselement. Das Befestigungselement durchdringt auf der dem Untergrund abgewandten Seite die langlochartige Aussparung gänzlich, und zwar derart, dass über das Befestigungselement eine Spannkraft auf das Anbauteil in Richtung des Untergrunds übertragen werden kann. Eine derartige Spannkraftbeaufschlagung kann beispielsweise durch eine Mutter oder den Kopf einer Betonschraube erfolgen. Die Verwendung einer langlochartigen Aussparung hat im Vergleich zu einer herkömmlichen Durchgangsbohrung den signifikanten Vorteil, dass das zu befestigende Anbauteil am Untergrund um eine gewisse translatorische Bewegung, welche durch die Längsausdehnung des langlochartigen Aussparung vorgegeben ist, justiert werden kann. Zudem erleichtert die Verwendung einer langlochartigen Aussparung die Montage von insbesondere schweren und unhandlichen Konstruktionen erheblich. Durch Anlage des Anbauteils am Untergrund ist eine erste, das Volumen der langlochartigen Aussparung begrenzende Fläche ausgebildet. Die Längsausdehnung der langlochartigen Aussparung in dem zu befestigenden Anbauteil erstreckt sich in Richtung einer Achse, welche zu einer anderen, im Zentrum und in Richtung des Befestigungselements lokalisierten Achse, im Folgenden "Befestigungselementachse" genannt, einen im Wesentlichen rechten Winkel einschließt. Anders gesagt schließt das über die Oberfläche des Untergrunds herausragende Befestigungselement, beispielsweise insbesondere der Schaft der Betonschraube und die Länge der langlochartigen Aussparung, einen im Wesentlichen rechten Winkel ein. Um dafür zu sorgen, dass bei auftretenden Querkräften auf das Anbauteil, also Kräfte, die nicht in Richtung der Befestigungselementachse und somit nicht senkrecht auf das Anbauteil wirken, das Anbauteil zusätzlich gegen Verschiebung gesichert ist, werden die langlochartigen Aussparungen mit einer fließfähigen, aushärtbaren Masse verfüllt. Somit kann sich die im Anbauteil befindliche langlochartige Aussparung und damit das Anbauteil selbst sich nicht mehr relativ zu dem Befestigungselement und damit relativ zum Untergrund bewegen. Dies wäre der Fall, wenn bei einer nicht ausgefüllten langlochartigen Aussparung die Querkräfte die durch das Befestigungselement hervorgerufene Reibkraft übersteigen. Das zur Verfüllung einer derartigen langlochartigen Aussparung vorgeschlagene Verfüllsystem weist ein Verfüllelement auf, bei welchem es sich insbesondere um eine Verfüllscheibe zum Verfüllen einer insbesondere zylinderartigen Vertiefung im Anbauteil handelt, wie sie aus dem Stand der Technik bekannt ist. Die Verfüllscheibe weist vorteilhafterweise kreisförmigen Umfang auf. Andere Geometrien sind nicht ausgeschlossen Zum Verfüllen weist das Verfüllelement eine Einfüllöffnung zum Einbringen einer fließfähigen, aushärtbaren Masse und eine Durchgangsöffnung zur Aufnahme des Befestigungselements auf. Der Durchmesser der Durchgangsöffnung entspricht insbesondere einem Mehrfachen des Durchmessers der Einfüllöffnung. Zusätzlich weist das Verfüllsystem eine Verfüllhilfe auf, die das Verfüllelement in einem Verfüllzustand zumindest teilweise umschließt. Unter einem "Verfüllzustand" soll verstanden werden, dass die Verfüllhilfe und das Verfüllelement derart zusammenwirken, dass das Einbringen der fließfähigen, aushärtbaren Masse in das Verfüllelement zum Auffüllen der langlochartigen Vertiefung oder eines langlochartigen Durchbruchs in einem Anbauteil unmittelbar möglich ist. Auf dem Teil des Befestigungselements, welches über die Oberfläche des Untergrunds hinausragt, ist das Verfüllsystem mittels des Verfüllelements derart angeordnet, dass das Verfüllsystem mit der Seite des Anbauteils zur Anlage kommt, die dem Untergrund abgewandt ist, wodurch eine zweite Begrenzung des Volumens der langlochartigen Aussparung gebildet ist. Das Befestigungselement verspannt das Verfüllelement gegen das am Untergrund zu befestigende Anbauteil. Hierfür ist der Durchmesser des Verfüllelements, insbesondere der Durchmesser des kreisförmigen Umfangs der Verfüllscheibe, größer dimensioniert als die Breite der langlochartigen Aussparung. Unter der "Breite der langlochartigen Aussparung" ist insbesondere die kleinere Ausdehnung der langlochartigen Aussparung zu verstehen, die im Regelfall größer als die Dicke des Anbauteils und damit größer als die Höhe der Seitenwände des Langlochs ist. Hingegen beschreibt die Länge der langlochartigen Aussparung die Längenausdehnung der langlochartigen Aussparung und somit die größere Länge. In einer beispielhaften Ausgestaltung ist das Befestigungselement hierbei als Gewindestange und das mit der Gewindestange korrespondierende Spannmittel als Mutter ausgebildet. Damit dem Verfüllsystem die Befähigung innewohnt, langlochartige Vertiefungen oder langlochartige Aussparungen zu verfüllen, korrespondieren Form und Größe der Verfüllhilfe insbesondere mit der Ausdehnung der langlochartigen Aussparung, also der Länge und der Breite der langlochartigen Aussparung. Verfüllhilfe und Verfüllelement bilden im Verfüllzustand eine erste Dichtfläche zur Anlage am Anbauteil. Hierunter ist insbesondere zu verstehen, dass die Verfüllhilfe und das Verfüllelement die langlochartige Aussparung deckelartig verschließen. Unter "Dichtfläche" und "verschließen" ist kein hermetisches Abdichten und kein hermetischer Verschluss zu verstehen, sondern vielmehr, dass das Verfüllelement und die Verfüllhilfe mit dem Anbauteil in Anlage sind. Das Verfüllvolumen ist also insbesondere durch die Anlage des Anbauteils am Untergrund, durch die Anlage des Verfüllelements und der Verfüllhilfe am Anbauteil und durch die Seitenwände der langlochartigen Aussparung begrenzt.

Vorzugsweise ist das Verfüllsystem derart gestaltet, dass im Verfüllzustand, also wenn das Verfüllelement und die Verfüllhilfe in einer Wirkverbindung stehen, die Verfüllhilfe in mindestens zwei unterschiedlichen radialen Ausdehnungsrichtungen bezüglich einer im Zentrum der Durchgangsöffnung des Verfüllelements liegenden gedachten Achse, welche parallel zur Achse der Durchgangsöffnung zur Aufnahme des Befestigungselements orientiert ist und insbesondere mit der Befestigungselementachse korrespondiert, mindestens zwei unterschiedlich lange Abschnitte aufweist. Die radialen Ausdehnungsrichtungen liegen insbesondere auf einer Geraden und sind einander entgegengerichtet. Unter "Richtung der Durchgangsöffnung" ist die Richtung zu verstehen, in der das Befestigungselement durch die Durchgangsöffnung hindurch bewegt werden kann. Die Funktion des Verfüllsystems ist jedoch auch dann gewährleistet, wenn die Verfüllhilfe zwei gleichlange Abschnitte aufweist.

Eine weitere Ausgestaltung des erfindungsgemäßen Verfüllsystems sieht vor, dass zwischen dem Verfüllelement und der Verfüllhilfe eine zweite Dichtfläche zur Begrenzung des Verfüllvolumens der langlochartigen Aussparung des Anbauteils angeordnet ist. Diese Dichtfläche verhindert, dass die fließfähige, aushärtbare Masse zwischen dem Verfüllelement und der Verfüllhilfe austreten kann. Des Weiteren ist die zweite Dichtfläche derart orientiert, dass eine Flächennormale der zweiten Dichtfläche und eine Flächennormale der ersten Dichtfläche einen im Wesentlichen rechten Winkel zueinander einschließen. Insbesondere korrespondieren Form und Verlauf der zweiten Dichtfläche mit einer Umfangsform des als Verfüllscheibe ausgebildeten Verfüllelements. Die zweite Dichtfläche muss jedoch die Verfüllscheibe nicht gänzlich umschließen. Insbesondere umschließt die zweite Dichtfläche die Umfangsfläche der Verfüllscheibe derart, dass mehr als die Hälfte der Umfangsfläche der Verfüllscheibe von der zweiten Dichtfläche umschlossen ist. Die zweite Dichtfläche kann insbesondere eine kreisrunde zylindrische Außenform aufweisen. Die zweite Dichtfläche ist jedoch nicht auf diese Form beschränkt, sondern kann bei einer abweichenden Ausgestaltung des Verfüllelements oder der Verfüllhilfe variieren.

Eine weitere Ausgestaltung der erfindungsgemäßen Befestigungsanordnung sieht vor, dass die erste Dichtfläche und die zweite Dichtfläche des Verfüllsystems einen Anstieg der fließfähigen, aushärtbaren Masse über das Verfüllvolumen des Anbauteils und somit über die langlochartige Aussparung hinaus verhindert.

Eine weitere Ausgestaltung des erfindungsgemäßen Verfüllsystems sieht vor, dass die Verfüllhilfe eine Aufstecköffnung aufweist, deren Form und Durchmesser insbesondere mit der Form und dem Durchmesser des Verfüllelements korrespondiert. Ist das Verfüllelement beispielsweise als kreisrunde Verfüllscheibe ausgebildet, ist die Aufstecköffnung näherungsweise kreisrund. Im aufgesteckten Zustand ist das Verfüllelement zumindest teilweise in der Aufstecköffnung und somit zumindest teilweise in der Verfüllhilfe gehalten. Die Berührungsfläche zwischen dem Verfüllelement und der Verfüllhilfe bildet insbesondere die zweite Dichtfläche. Die Ausführungsform der Aufstecköffnung ist nicht auf eine Kreisform beschränkt. Auch ist ein vieleckiges Verfüllelement mit einer hiermit korrespondierenden vieleckige Aufstecköffnung möglich.

In einer weiteren erfindungsgemäßen Ausgestaltung des Verfüllsystems sind die Verfüllhilfe und das Verfüllelement, insbesondere die Verfüllscheibe, drehbar miteinander verbunden. Hierunter ist zu verstehen, dass die Verfüllhilfe um eine Achse, die insbesondere im Zentrum der Durchgangsöffnung des Verfüllelements liegt und in Richtung der Durchgangsöffnung der Verfüllscheibe orientiert ist und insbesondere mit der Befestigungselementachse korrespondiert, rotiert werden kann. Um selbige Achse kann auch das Verfüllelement bei festgehaltener Verfüllhilfe rotiert werden. Dadurch, dass die Verfüllhilfe insbesondere zwei unterschiedlich lange Abschnitte aufweist, liegt der Vorteil der Drehbarkeit darin begründet, dass das Verfüllsystem nicht mittig in der zu befüllenden langlochartigen Aussparung sitzen muss. Der Vorteil einer insbesondere kreisrunden Ausgestaltung der Verfüllscheibe ist darin zu sehen, dass selbst bei einer kompletten Rotation der Verfüllhilfe um die Verfüllscheibe, also einer Rotation um 360°, die zweite Dichtfläche zu jeder Zeit bestehen bleibt und jeder beliebige Winkel eingestellt werden kann. Zudem ist eine Rotation einfach zu realisieren, da der Kreisumfang der Verfüllscheibe als Drehlager wirkt.

Eine weitere Ausgestaltung des erfindungsgemäßen Verfüllsystems sieht vor, dass die Verfüllhilfe und das Verfüllelement federartig klemmend miteinander verbunden sind. Unter "federartig" ist nicht federnd im eigentlichen Sinne zu verstehen, sondern vielmehr, dass während des Einsteckens des Verfüllelements in die Aufstecköffnung der Verfüllhilfe oder während des Aufsteckens der Verfüllhilfe auf das Verfüllelement, die Verfüllhilfe leicht elastisch aufgebogen wird, somit als elastische Feder wirkt und dadurch eine Spannkraft auf das Verfüllelement ausüben kann, derart, dass das Verfüllelement reibschlüssig in der Verfüllhilfe gehalten ist. Anders ausgedrückt besteht zwischen der Verfüllhilfe und dem Verfüllelement eine "Klemmverbindung". Die Federkraft ist derart ausgelegt, dass sich die Verfüllhilfe und das Verfüllelement aufgrund der Schwerkraft nicht relativ zueinander von selbst bewegen können, aber eine relative Drehbewegung von Verfüllhilfe und Verfüllelement zueinander ohne großen händischen Kraftaufwand zu bewerkstelligen ist.

Eine Weiterbildung der erfindungsgemäßen Befestigungsanordnung sieht vor, dass die Verfüllhilfe klemmend in Anlage an dem Anbauteil gehalten ist. Hierunter ist zu verstehen, dass, bis auf die Klemmung zwischen Verfüllscheibe und Verfüllhilfe, keine zusätzliche Vorrichtung oder Mechanik vorhanden ist, die die Verfüllhilfe in Anlage an der Seite des Anbauteils hält, die dem Untergrund abgewandt ist.

Weiterhin ist die erfindungsgemäße Befestigungsanordnung vorzugsweise so ausgestaltet, dass das Verfüllsystem die im Anbauteil befindliche langlochartige Aussparung vollständig überdeckt. Dies wird zum einen durch ein Verfüllelement realisiert, das einen Teil der langlochartigen Aussparung auf der dem Untergrund abgewandten Seite überdeckt. Die auf das Verfüllelement aufgesteckte Verfüllhilfe ist händisch so um das Verfüllelement rotierbar, dass die langlochartige Aussparung gänzlich überdeckt ist. Hierzu ist die Verfüllhilfe so dimensioniert, dass die Aussparung zumindest bis zu den Rändern der Aussparung bündig abgedeckt ist. Insbesondere ist jedoch die Verfüllhilfe derart gestaltet und dimensioniert, dass sie eine größere Länge als die Länge der langlochartigen Aussparung und eine größere Breite als die Breite der langlochartigen Aussparung aufweist. Die Verfüllhilfe weist hierfür zwar eine mit der langlochartigen Aussparung korrespondierende Form auf, allerdings ist die Form nicht hierauf beschränkt. So kann die Verfüllhilfe auch eine ovale oder rechteckige Ausgestaltung aufweisen.

Eine weitere erfindungsgemäße Ausgestaltung des Verfüllsystems sieht vor, dass die Verfüllhilfe zumindest teilweise aus einem transparenten Kunststoff und das Verfüllelement vorzugsweise aus einem Metall gefertigt ist. Der Einsatz eines alternativen Materials, welches ähnliche mechanische Eigenschaften aufweist, ist ebenfalls möglich. Unter "Transparenz" ist in diesem Zusammenhang der für den Menschen sichtbare Spektralbereich der elektromagnetischen Strahlung zu verstehen. Anders gesagt, das für den Menschen sichtbare Licht ist in der Lage, zumindest teilweise durch den Kunststoff durchzudringen, was dazu führt, dass durch den Kunststoff zumindest teilweise hindurchgesehen werden kann. Durch die zumindest teilweise vorhandene Transparenz ist es möglich, den Verfüllvorgang der lochartigen Aussparung mit einer fließfähigen, aushärtbaren Masse in einem Anbauteil visuell zu verfolgen. Hierdurch kann der Verfüllvorgang jederzeit kontrolliert werden. Sobald sich die Masse gänzlich in der Aussparung verteilt hat und folglich zur Anlage an den transparenten Kunststoff kommt, ist visuell erkennbar, dass der Verfüllvorgang beendet ist. Der Vorteil hierbei ist darin zu sehen, dass keine fließfähige Masse, wie bei anderen Verfüllsystemen üblich, als Indikation einer vollständigen Verfüllung über das Verfüllsystem hinweg austreten muss. Dadurch, dass das Verfüllelement aus einem Metall besteht, kann es gegen das Anbauteil verspannt und fest mit dem Befestigungselement verbunden werden. Somit ist das Verfüllelement in der Lage, relativ hohe Spannkräfte aufzunehmen, die teilweise bei der Verankerung des Anbauteils an dem zu befestigenden Untergrund zum Wirken kommen. Das Verfüllelement kann relativ hohe Kräfte aufnehmen, ohne seine strukturelle Integrität zu verlieren. Generell muss ein Gleitvermögen des Kunststoffs der Verfüllhilfe und des Metalls des Verfüllelements gegeneinander möglich sein, um die relative Bewegungsmöglichkeit der Verfüllhilfe gegenüber der Verfüllscheibe zu gewährleisten.

Um eine Wiederverwendungsmöglichkeit der Verfüllhilfe und eine relativ einfache Montage des Verfüllsystems zu gewährleisten, ist bei einer weiteren Ausgestaltung des erfindungsgemäßen Verfüllsystems vorgesehen, dass die Verfüllhilfe von dem Verfüllelement trennbar ausgebildet ist. In diesem Fall kann das Verfüllelement am Befestigungselement verbleiben und die Verfüllhilfe nach dem Aushärten der fließfähigen Masse von dem Verfüllelement gelöst werden. Nach einem eventuell notwendigen Reinigungsschritt zum Wiederherstellen der Transparenz der Verfüllhilfe, kann diese weiterverwendet werden.

Die Erfindung wird nachfolgend anhand folgender Figuren erklärt:
Es zeigen:
- Figur 1: eine erfindungsgemäße Befestigungsanordnung im eingebauten Zustand in einer perspektivischen Darstellung;
- Figur 2: einen perspektivischen Schnitt durch die Befestigungsanordnung der Figur 1 längs der langlochartigen Aussparung; und
- Figur 3: die perspektivische Darstellung aus Figur 2 nach erfolgter Verfüllung der langlochartigen Aussparung und nach der Demontage der Verfüllhilfe.

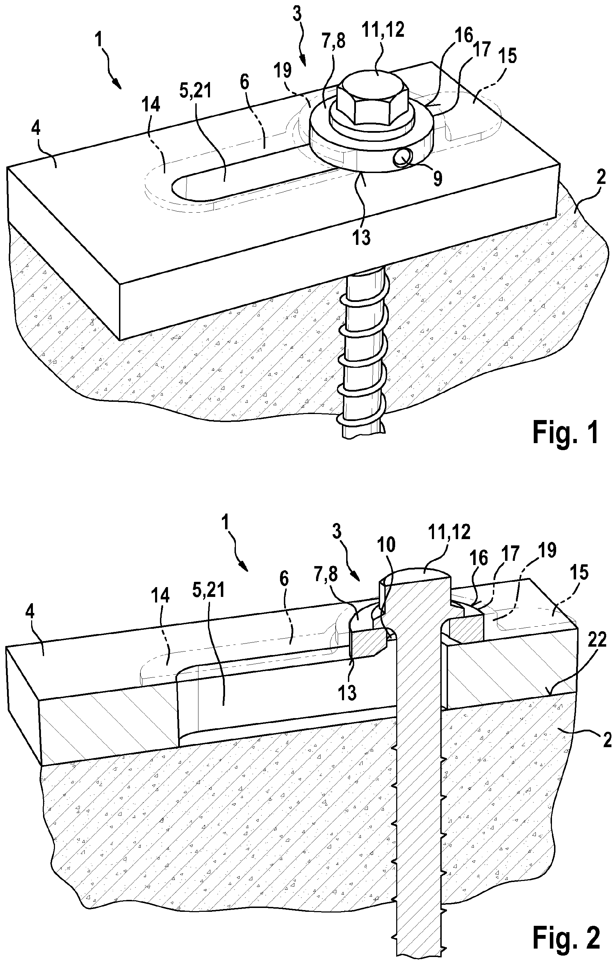

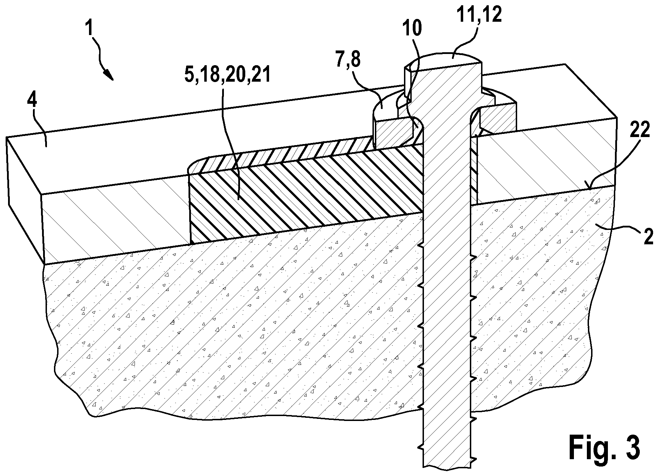

In der Figur 1 ist eine Ausführungsform einer erfindungsgemäßen Befestigungsanordnung 1 in einer perspektivischen Ansicht dargestellt. Figur 2 zeigt die Befestigungsanordnung 1 in einem perspektivischen Schnitt. Die Befestigungsanordnung 1 umfasst einen Untergrund 2, bei welchem es sich insbesondere um ein zumindest abschnittsweise ebenes, stein- oder betonartiges Material handelt. Der Untergrund 2 kann generell aus jedem Material bestehen, welches eine gewisse Grundsolidität aufweist. Daher sind die genannten Materialien lediglich beispielhaft und nicht abschließend benannt. Weiter umfasst die Befestigungsanordnung 1 ein Anbauteil 4, welches am Untergrund 2 angeordnet und in den dargestellten Figuren 1 bis 3 quaderartig ausgeführt ist. Bei dem Anbauteil 4 handelt es sich um eine Stahlplatte, die einen ebenen Abschnitt zur Anlage am Untergrund 2 aufweist. Wie der Untergrund 2 kann auch das Anbauteil 4 prinzipiell aus jedem, eine gewisse Grundsolidität aufweisenden Material bestehen. Hierzu zählen beispielsweise auch holz- und kunststoffartige Materialien. Im Anbauteil 4 ist zur Befestigung des Anbauteils 4 am Untergrund 2 insbesondere eine das Anbauteil 4 zumindest abschnittsweise gänzlich durchbrechende, langlochartige Aussparung 5 angeordnet. Die Verwendung der langlochartigen Aussparung 5 erleichtert insbesondere die Montage und die Justierung des Anbauteils 4 am Untergrund 2. Das im Untergrund 2 zumindest teilweise befestigte Befestigungselement 11 ist derart gestaltet, dass dieses auf der vom Untergrund 2 abgewandten Seite über die Oberfläche 22 des Untergrunds 2 übersteht und zwar derart, dass es die langlochartige Aussparung 5 im Anbauteil 4 gänzlich durchdringt. In der dargestellten erfindungsgemäßen Befestigungsanordnung 1 ist das Befestigungselement 11 eine Betonschraube 12, welche das Anbauteil 4 in Richtung des Untergrunds 2 mit einer Spannkraft beaufschlagt. Im folgenden Verlauf der Beschreibung der erfindungsgemäßen Ausführungsform der Befestigungsanordnung 1 wird sich auf die Betonschraube 12 als Befestigungselement 11 beschränkt. Dem Fachmann ist jedoch klar, dass das Befestigungselement 11 vielfältig ausgestaltet sein kann und dass die Betonschraube 12 durch ein anderes, den gleichen Zweck erfüllendes Befestigungselement 11 ersetzt werden kann. Beispielhafte Ausgestaltungsformen stellen hierbei Bolzenanker, Hülsenanker oder mit einer aushärtbaren Masse im Untergrund 2 zu verankernde Gewindestangen dar. Das Volumen der langlochartigen Aussparung 5 im Anbauteil 4 und damit verbunden das Verfüllvolumen 21 ist einseitig durch den Untergrund 2 beziehungsweise durch die Oberfläche 22 des Untergrunds 2 begrenzt. Die Verwendung der langlochartigen Aussparung 5 hat insbesondere den Vorteil, dass abhängig von der Ausdehnung der langlochartigen Aussparung 5 das Anbauteil 4 vor der Endmontage, also bevor das Anbauteil 4 durch die Betonschraube 12 gegen den Untergrund 2 verspannt wird, relativ zum Untergrund 2 justiert werden kann. Mit anderen Worten ist in der beschriebenen Ausführungsform der Befestigungsanordnung 1 das translatorische "Bewegungsspiel" des Anbauteils 4 parallel zum Untergrund 2 durch die Länge der langlochartigen Aussparung 5 und der Betonschraube 12 eingeschränkt. Am Kopfende der Betonschraube 12 ist ein Verfüllelement 7, insbesondere eine Verfüllscheibe 8 derart angeordnet, dass die Betonschraube 12 eine Durchgangsöffnung 10 der Verfüllscheibe 8 durchdringt und die Verfüllscheibe 8 mit der Seite des Anbauteils 4 in Anlage kommt, welche von der Oberfläche 22 des Untergrunds 2 abgewandt ist. Die Betonschraube 12 verspannt die Verfüllscheibe 8 gegen das Anbauteil 4 und somit das Anbauteil 4 gegen den Untergrund 2. Im folgenden Verlauf der Beschreibung der erfindungsgemäßen Ausführungsform der Befestigungsanordnung 1 wird sich der Einfachheit halber auf die Verfüllscheibe 8 als Verfüllelement 7 beschränkt. Dem Fachmann ist jedoch klar, dass das Verfüllelement 7 nicht als Scheibe ausgeführt sein muss, sondern vielfältige Ausgestaltungen möglich sind. In einer bevorzugten Ausgestaltungsform ist die Verfüllscheibe 8 aus Metall gefertigt, um hohe Spannkräfte durch die Betonschraube 12 aufnehmen zu können, ohne sich unter einem bestimmungsgemäßen Druck zu verformen. Die Verfüllscheibe 8 ist so dimensioniert, dass in Anlage am Anbauteil 4 auf der vom Untergrund 2 abgewandten Seite zumindest ein Teil der sich im Anbauteil 4 befindlichen, langlochartigen Aussparung 5 vollständig von der Verfüllscheibe 8 überdeckt ist. Hierunter ist insbesondere zu verstehen, dass die radiale Ausdehnung der Verfüllscheibe 8 größer ist, als die Breite der langlochartigen Aussparung 5. Unter der Breite der langlochartigen Aussparung 5 ist insbesondere die kleinere Ausdehnung der langlochartigen Aussparung 5 zu verstehen, die im Regelfall größer als die Dicke des Anbauteils 4 und damit größer als die Höhe der Seitenwände der langlochartigen Aussparung 5 ist. Die Verfüllscheibe 8 weist an einer zweckmäßigen und gut zugänglichen Fläche eine Einfüllöffnung 9 zum Einbringen einer fließfähigen, aushärtbaren Masse 18 auf, bei welcher es sich insbesondere um einen Verbundmörtel handelt. Die Einfüllöffnung 9 ist derart gestaltet, dass bei Anlage der Verfüllscheibe 8 am Anbauteil 4 die fließfähige, aushärtbare Masse 18 beim Einbringen in die Einfüllöffnung 9 in die im Anbauteil 4 befindliche, langlochartige Aussparung 5 geleitet wird. Insbesondere ist die Einfüllöffnung 9 derart dimensioniert, dass sie um ein mehrfaches kleiner ist, als die zur Aufnahme der Betonschraube 12 vorgesehene Durchgangsöffnung 10. Da die Verfüllscheibe 8 die langlochartige Aussparung 5 nicht gänzlich überdeckt, dient als weitere Begrenzung des Volumens der langlochartigen Aussparung 5 und des Verfüllvolumens 21 eine Verfüllhilfe 6. Die Verfüllhilfe 6 bildet zusammen mit der Verfüllscheibe 8 ein Verfüllsystem 3. Die Form der Verfüllhilfe 6 entspricht insbesondere der Form der langlochartigen Aussparung 5 im Anbauteil 4. Im hier dargestellten Ausführungsbeispiel hat die Verfüllhilfe 6 die Grundform eines langgestreckten Quaders mit Radien an den Längsenden und einer Materialstärke im Millimeterbereich. Insbesondere ist die Länge der Verfüllhilfe 6 hierbei größer als die Länge der langlochartigen Aussparung 5, und die Breite der Verfüllhilfe 6 ist größer als die Breite der langlochartigen Aussparung 5. Weder die Form noch die Materialstärke der Verfüllhilfe 6 sind jedoch hierauf beschränkt. So kann die Verfüllhilfe 6 auch eine mehreckige oder ovale Form aufweisen, solange mit der Verfüllhilfe 6, zusammen mit dem Verfüllelement 7, die langlochartige Aussparung 5 vollständig überdeckbar ist. Insbesondere ist die Verfüllhilfe 6 derart dimensioniert, dass sie nicht bündig mit dem Rand der langlochartigen Aussparung 5 abschließt, sondern über den Rand zumindest teilweise übersteht. Die Stärke der Verfüllhilfe 6, also die Ausdehnung in eine Richtung, die sich parallel zur Einbringrichtung der Betonschraube 12 in den Untergrund 2 erstreckt, korrespondiert insbesondere mit der Stärke, sprich der Höhe der Verfüllscheibe 8. Jedoch ist die Stärke der Verfüllhilfe 6 nicht zwangsläufig auf die Ausgestaltung der Verfüllscheibe 8 zu reduzieren. Die Stärke der Verfüllhilfe 6 kann deutlich von der Stärke der Verfüllscheibe 8 abweichen, ohne dass der verwendungsgemäße Zweck des Verfüllelements 7 beeinträchtigt ist. Die Verfüllhilfe 6 weist eine Aufstecköffnung 17 auf, welche in Form und Größe mit der Verfüllscheibe 8 korrespondiert. Im dargestellten Ausführungsbeispiel ist die Verfüllscheibe 8 annähernd kreisrund und dementsprechend die damit korrespondierende Aufstecköffnung 17 in der Verfüllhilfe 6 ebenfalls kreisartig. Bei einer Ausbildung des Verfüllelements 7 beispielsweise als Mehrkant, wäre die Aufstecköffnung 17 ebenfalls als Mehrkant ausgebildet, ähnlich einem Ringschlüssel, der eine Mutter umgreift. Der Ringschlüssel wäre in dem beispielhaften Fall die Aufstecköffnung 17 in der Verfüllhilfe 6 und die Mutter das Verfüllelement 7. Die Verfüllhilfe 6 ist mittels der Aufstecköffnung 17 auf die Verfüllscheibe 8 aufsteckbar. Im aufgesteckten Zustand, also wenn die Verfüllhilfe 6 mit der Seite des Anbauteils 4 in Anlage kommt, die dem Untergrund 2 und der Oberfläche 22 abgewandt ist, bilden die Verfüllscheibe 8 und die Verfüllhilfe 6 eine erste Dichtfläche 13 zur Begrenzung der fließfähigen, aushärtbaren Masse 18, also eine Begrenzung des Verfüllvolumens 21. Unter "Dichtfläche" ist keine hermetische Dichtung zu verstehen, sondern vielmehr, dass das Verfüllsystem 3 in begrenzender Anlage mit der zu verfüllenden, langlochartigen Aussparung im am Untergrund 2 befestigten Anbauteil 4 steht. Die Verfüllhilfe 6 ist durch die Aufstecköffnung 17 mit dem Verfüllelement 7, insbesondere der Verfüllscheibe 8, klemmend und drehbar reibschlüssig verbunden. Um eine verbesserte Klemm- und Federwirkung zu erzielen, ist in dem vorliegenden, erfindungsgemäßen Ausführungsbeispiel eine Seite der Aufstecköffnung 17 nicht gänzlich geschlossen. Die klemmende Wirkung ist jedoch auch dann zu erzielen, wenn die Aufstecköffnung 17 der Verfüllhilfe 6 die Verfüllscheibe 8 gänzlich umschließt. Die Klemmwirkung ist zudem so dimensioniert, dass die Verfüllhilfe 6 händisch ohne großen Kraftaufwand um die Verfüllscheibe 8, also um eine gedachte Achse, die mit der Längsachse des Befestigungselements 11 korrespondiert, gedreht werden kann. Die Verfüllhilfe 6 ist derart um die Verfüllscheibe 8 zu drehen, bis die Verfüllscheibe 8 und die Verfüllhilfe 6 die langlochartige Aussparung 5 im Untergrund 2 vollständig überdecken. Dies ist insbesondere der Fall, wenn die Verfüllhilfe 6 parallel zu der langlochartigen Aussparung 5 ausgerichtet ist. Um einen besseren reibschlüssigen Halt der Verfüllhilfe 6 an der Verfüllscheibe 8 und somit eine stabilere Anlage der Verfüllhilfe 6 am Anbauteil 4 zu erzielen, ist an der Aufstecköffnung 17 der Verfüllhilfe 6 eine wulstartige Erhöhung 19 angeordnet, die insbesondere mit der Form der Verfüllscheibe 8 korrespondiert und mit dieser in Anlage kommt. Zwischen der wulstartigen Erhöhung 19 und der Verfüllscheibe 8 ist durch Klemmung und Reibschluss eine zweite Dichtfläche 16 ausgebildet, welche dafür sorgt, dass an der Aufstecköffnung 17 zwischen Verfüllhilfe 6 und Verfüllscheibe 8 keine fließfähige, aushärtbare Masse 18 heraustreten kann. Im erfindungsgemäßen Ausführungsbeispiel korrespondiert die Höhe der wulstartigen Erhöhung 19 mit der Stärke der Verfüllscheibe 8. Dies ist nur beispielhaft und zudem ist die Funktion des Verfüllsystems 3 selbst dann gewährleistet, wenn auf eine wulstartige Erhöhung 19 gänzlich verzichtet wird. Dies würde bedeuten, dass die zweite Dichtfläche 16 direkt zwischen der Aufstecköffnung 17 und der Verfüllscheibe 8 ausgebildet werden würde, was die Funktion des Verfüllsystems 2 nicht beeinträchtigen würde. Die Verfüllhilfe 6 weist einen ersten Abschnitt 14 und einen zweiten Abschnitt 15 auf, welche, bezogen auf die Aufstecköffnung 17, unterschiedliche Längen aufweisen. Der Vorteil hierbei liegt darin, dass die Betonschraube 12 nach der Befestigung des Anbauteils 4 am Untergrund 2 nicht mittig in der langlochartigen Aussparung 5 sitzen muss, denn durch Rotation von insbesondere 180° der Verfüllhilfe 6 um die Verfüllscheibe 8 kann, bei ursprünglicher paralleler Orientierung der Verfüllhilfe 6 zur langlochartigen Aussparung 5, eine Position der Verfüllhilfe 6 bezüglich des Anbauteils 4 derart eingestellt werden, dass die Verfüllhilfe 6 die langlochartige Aussparung 5 vollständig überdeckt, und zwar unabhängig davon, in welcher relativen Position sich die Betonschraube 12 in der langlochartigen Aussparung 5 befindet. Um den Verfüllvorgang, also das Einbringen der fließfähigen, aushärtbaren Masse 18 in die langlochartige Aussparung 5, also in das Verfüllvolumen 21, jederzeit kontrollieren zu können, ist die Verfüllhilfe 6 zumindest teilweise aus einem transparenten Kunststoff gefertigt. Somit ist es dem Benutzer des Verfüllsystems 3 möglich, durch die Verfüllhilfe 6 in Richtung des Untergrunds 2 hindurchzusehen, um den Verfüllvorgang, also das Ausbreiten der fließfähigen, aushärtbaren Masse 18 in der langlochartigen Aussparung 5 und somit im Verfüllvolumen 21, zu beobachten. Durch das Einbringen der fließfähigen, aushärtbaren Masse 18 in die Verfüllscheibe 8 breitet sich diese von der Verfüllscheibe 8 ausgehend im Verfüllvolumen 21 aus. Das Ende des Verfüllvorgangs ist dann erreicht, wenn die langlochartige Aussparung 5 und damit das Verfüllvolumen 21 gänzlich gefüllt ist. Ab diesem Punkt ist die fließfähige, aushärtbare Masse 18 gänzlich in Anlage mit der Verfüllhilfe 6 und ein Hindurchsehen durch die Verfüllhilfe in Richtung des Untergrunds 2 ist folglich nicht mehr möglich. Ein weiteres Einbringen der fließfähigen, aushärtbaren Masse in die Einfüllöffnung 9 würde dazu führen, dass diese aus der ersten Dichtfläche 13 oder der zweiten Dichtfläche 16 austreten würde, was nicht Sinn und Zweck der erfindungsgemäßen Befestigungsanordnung 1 darstellt. In Figur 3 ist das Ende des Verfüllvorgangs in einer perspektivischen Schnittdarstellung dargestellt. Nach einer, von der Art der fließfähigen, aushärtbaren Masse 18 abhängigen Aushärtezeit, kann die Verfüllhilfe 6 händisch von der Verfüllscheibe 8 und somit vom Anbauteil 4 gelöst werden. Durch eine stoffschlüssige Verbindung 20, bewirkt durch die fließfähige, aushärtbare Masse 18, zwischen dem Untergrund 2, dem Anbauteil 4, der Betonschraube 12 und der Verfüllscheibe 8 ist das Anbauteil 2, zusätzlich zu der Spannkraft, die die Betonschraube 12 auf das Anbauteil 4 überträgt, gegen Lösen gesichert. Nach einem eventuell notwendigen Reinigungsschritt der Verfüllhilfe 6 kann diese weiterverwendet werden.

### Bezugszeichenliste

### Verfüllsystem und Befestigungsanordnung zum Verfüllen von langlochartigen Aussparungen

- 1: Befestigungsanordnung
- 2: Untergrund
- 3: Verfüllsystem
- 4: Anbauteil
- 5: langlochartige Aussparung
- 6: Verfüllhilfe
- 7: Verfüllelement
- 8: Verfüllscheibe
- 9: Einfüllöffnung
- 10: Durchgangsöffnung
- 11: Befestigungselement
- 12: Betonschraube
- 13: erste Dichtfläche
- 14: erster Abschnitt
- 15: zweiter Abschnitt
- 16: zweite Dichtfläche
- 17: Aufstecköffnung
- 18: fließfähige, aushärtbare Masse
- 19: wulstartige Erhöhung
- 20: stoffschlüssige Verbindung
- 21: Verfüllvolumen
- 22: Oberfläche des Untergrunds 2

## Patentansprüche

1. Verfüllsystem (3) zum Befüllen einer langlochartigen Aussparung (5) in an einem Untergrund (2) befestigten Anbauteil (4) mit einer fließfähigen, aushärtbaren Masse (18), aufweisend ein Verfüllelement (7), insbesondere eine Verfüllscheibe (8), das eine Einfüllöffnung (9) zum Einbringen der fließfähigen, aushärtbaren Masse (18) in die langlochartige Aussparung (5) und eine Durchgangsöffnung (10) zur Aufnahme eines Befestigungselements (11) aufweist, **dadurch gekennzeichnet, dass** das Verfüllsystem (3) eine Verfüllhilfe (6) aufweist und derart gestaltet ist, dass die Verfüllhilfe (6) das Verfüllelement (7) in einem Verfüllzustand zumindest teilweise umschließt und die Verfüllhilfe (6) zusammen mit dem Verfüllelement (7) eine erste Dichtfläche (13) zur Anlage am Anbauteil (4) zur Begrenzung eines Verfüllvolumens (21) der langlochartigen Aussparung (5) bildet.

2. Verfüllsystem (3) nach Anspruch 1, **dadurch gekennzeichnet, dass** die Verfüllhilfe (6) in mindestens zwei unterschiedlichen radialen Ausdehnungsrichtungen bezüglich einer Achse, die in und in Richtung der Durchgangsöffnung (10) des Verfüllelements (7) verläuft, mindestens zwei unterschiedlich lange Abschnitte (14, 15) aufweist.

3. Verfüllsystem (3) nach den Ansprüchen 1 oder 2, **dadurch gekennzeichnet, dass** zwischen dem Verfüllelement (7) und der Verfüllhilfe (6) eine zweite Dichtfläche (16) zur Begrenzung des Verfüllvolumens (21) der langlochartigen Aussparung (5) ausgebildet ist.

4. Verfüllsystem (3) nach einem der vorangegangenen Ansprüche, **dadurch gekennzeichnet, dass** die Verfüllhilfe (6) eine Aufstecköffnung (17) aufweist, deren Form und Durchmesser insbesondere mit der Form und dem Durchmesser des Verfüllelements (7) korrespondiert.

5. Verfüllsystem (3) nach einem der vorangegangenen Ansprüche, **dadurch gekennzeichnet, dass** die Verfüllhilfe (6) und das Verfüllelement (7) drehbar miteinander verbunden sind.

6. Verfüllsystem (3) nach einem der vorangegangenen Ansprüche, **dadurch gekennzeichnet, dass** die Verfüllhilfe (6) und das Verfüllelement (7) federartig klemmend miteinander verbunden sind.

7. Verfüllsystem (3) nach einem der vorangegangenen Ansprüche, **dadurch gekennzeichnet, dass** die Verfüllhilfe (6) zumindest teilweise aus einem transparenten Kunststoff und das Verfüllelement (7) aus einem Metall besteht.

8. Verfüllsystem (3) nach einem der vorangegangenen Ansprüche, **dadurch gekennzeichnet, dass** die Verfüllhilfe (6) von dem Verfüllelement (7) lösbar ist.

9. Befestigungsanordnung (1) mit einem Verfüllsystem (3) nach den Ansprüchen 1 bis 8 und einem eine langlochartige Aussparung (5) aufweisenden Anbauteil (4), welches mit einem Befestigungselement (11), insbesondere einer Betonschraube (12) an einem Untergrund (2) befestigt ist, wobei das Befestigungselement (11) durch die langlochartige Aussparung (5) ragt und das Verfüllsystem (3) mittels dem Verfüllelement (7) auf dem Befestigungselement (11) angeordnet und das Verfüllelement (7) durch das Befestigungselement (11) gegen die langlochartige Aussparung (5) im Anbauteil (4) gehalten ist.

10. Befestigungsanordnung (1) nach Anspruch 9, **dadurch gekennzeichnet, dass** die Verfüllhilfe (6) klemmend in Anlage an dem Anbauteil (4) gehalten ist.

11. Befestigungsanordnung (1) nach den Ansprüchen 9 oder 10, **dadurch gekennzeichnet, dass** das Verfüllsystem (3) die im Anbauteil (4) befindliche langlochartige Aussparung (5) vollständig überdeckt.

12. Befestigungsanordnung (1) nach einem der Ansprüche 9 bis 11, **dadurch gekennzeichnet, dass** die erste Dichtfläche (13) und die zweite Dichtfläche (16) des Verfüllsystems (3) einen Anstieg der fließfähigen, aushärtbaren Masse (18) über die Oberkante der im Anbauteil (4) befindlichen langlochartigen Aussparung (5) hinaus verhindern.

## Claims

1. Filling system (3) for filling a slot-like recess (5) in an add-on part (4) fixed to a substrate (2) with a flowable, curable composition (18), having a filling element (7), especially a filling disc (8), which has an introduction opening (9) for introduction of the flowable, curable composition (18) into the slot-like recess (5) and a through-opening (10) for receiving a fixing element (11), **characterised in that** the filling system (3) has a filling aid (6) and is configured in such a way that the filling aid (6) at least partly encompasses the filling element (7) in a filling state, and the filling aid (6) together with the filling element (7) forms a first sealing surface (13) for contact with the add-on part (4) for delimitation of a filling volume (21) of the slot-like recess (5).

2. Filling system (3) according to claim 1, **characterised in that** the filling aid (6) has at least two portions (14, 15) of different lengths extending in at least two different radial directions in respect of an axis running in and in the direction of the through-opening (10) of the filling element (7).

3. Filling system (3) according to claim 1 or 2, **characterised in that** between the filling element (7) and the filling aid (6) there is formed a second sealing surface (16) for delimitation of the filling volume (21) of the slot-like recess (5).

4. Filling system (3) according to any one of the preceding claims, **characterised in that** the filling aid (6) has a mounting opening (17), the shape and diameter of which is especially complementary to the shape and the diameter of the filling element (7).

5. Filling system (3) according to any one of the preceding claims, **characterised in that** the filling aid (6) and the filling element (7) are rotatably connected to one another.

6. Filling system (3) according to any one of the preceding claims, **characterised in that** the filling aid (6) and the filling element (7) are clamped to one another in a sprung manner.

7. Filling system (3) according to any one of the preceding claims, **characterised in that** the filling aid (6) consists at least partly of a transparent plastics material and the filling element (7) consists of a metal.

8. Filling system (3) according to any one of the preceding claims, **characterised in that** the filling aid (6) is detachable from the filling element (7).

9. Fixing arrangement (1) with a filling system (3) according to claims 1 to 8 and with an add-on part (4) having a slot-like recess (5), which is fixed to a substrate (2) with a fixing element (11), especially a concrete screw (12), wherein the fixing element (11) projects through the slot-like recess (5) and the filling system (3) is arranged on the fixing element (11) by means of the filling element (7) and the filling element (7) is held against the slot-like recess (5) in the add-on part (4) by the fixing element (11).

10. Fixing arrangement (1) according to claim 9, **characterised in that** the filling aid (6) is held clamped in contact with the add-on part (4).

11. Fixing arrangement (1) according to claim 9 or 10, **characterised in that** the filling system (3) completely covers the slot-like recess (5) located in the add-on part (4).

12. Fixing arrangement (1) according to any one of claims 9 to 11, **characterised in that** the first sealing surface (13) and the second sealing surface (16) of the filling system (3) prevent the flowable, curable composition (18) from rising above the upper edge of the slot-like recess (5) located in the add-on part (4).

## Revendications

1. Système de comblement (3) destiné à combler, à l'aide d'une masse durcissable coulante (18), un évidement (5) du type trou oblong pratiqué dans une partie rapportée (4) fixée à une structure sous-jacente (2), comportant un élément de comblement (7), en particulier un disque de comblement (8) comprenant un orifice de déversement (9), en vue d'introduire la masse durcissable coulante (18) dans l'évidement (5) du type trou oblong, et un orifice de passage (10) dédié à la réception d'un élément de fixation (11), **caractérisé par le fait que** ledit système de comblement (3) est pourvu d'un auxiliaire de comblement (6) et est réalisé de façon telle que ledit auxiliaire de comblement (6) ceinture au moins partiellement l'élément de comblement (7) dans un état de comblement, lequel auxiliaire de comblement (6) forme, conjointement audit élément de comblement (7), une première surface d'étanchement (13) conçue pour venir en applique contre la partie rapportée (4), de manière à limiter un volume de remplissage (21) de l'évidement (5) du type trou oblong.

2. Système de comblement (3) selon la revendication 1, **caractérisé par le fait que** l'auxiliaire de comblement (6) comprend au moins deux régions (14, 15) de longueurs différentes dans au moins deux directions d'expansion radiale différentes par rapport à un axe s'étendant dans la direction de l'orifice de passage (10) de l'élément de comblement (7).

3. Système de comblement (3) selon les revendications 1 ou 2, **caractérisé par le fait qu'**une seconde surface d'étanchement (16) est ménagée entre l'élément de comblement (7) et l'auxiliaire de comblement (6), afin de limiter le volume de remplissage (21) de l'évidement (5) du type trou oblong.

4. Système de comblement (3) selon l'une des revendications précédentes, **caractérisé par le fait que** l'auxiliaire de comblement (6) est muni d'un orifice d'emboîtement (17) dont la forme et le diamètre concordent, en particulier, avec la forme et le diamètre de l'élément de comblement (7).

5. Système de comblement (3) selon l'une des revendications précédentes, **caractérisé par le fait que** l'auxiliaire de comblement (6) et l'élément de comblement (7) sont reliés l'un à l'autre avec faculté de rotation.

6. Système de comblement (3) selon l'une des revendications précédentes, **caractérisé par le fait que** l'auxiliaire de comblement (6) et l'élément de comblement (7) sont reliés l'un à l'autre avec effet de coincement, à la manière d'un ressort.

7. Système de comblement (3) selon l'une des revendications précédentes, **caractérisé par le fait que** l'auxiliaire de comblement (6) est constitué, au moins en partie, d'une matière plastique transparente et l'élément de comblement (7) est constitué d'un métal.

8. Système de comblement (3) selon l'une des revendications précédentes, **caractérisé par le fait que** l'auxiliaire de comblement (6) peut être dissocié d'avec l'élément de comblement (7).

9. Dispositif de fixation (1) comprenant un système de comblement (3) conforme aux revendications 1 à 8, et une partie rapportée (4) qui est munie d'un évidement (5) du type trou oblong et est fixée à une structure sous-jacente (2) à l'aide d'un élément de fixation (11), notamment d'une vis à béton (12), ledit élément de fixation (11) traversant ledit évidement (5) du type trou oblong, ledit système de comblement (3) étant implanté sur l'élément de fixation (11) au moyen de l'élément de comblement (7), et ledit élément de comblement (7) étant retenu dans ladite partie rapportée (4), contre ledit évidement (5) du type trou oblong, par l'intermédiaire dudit élément de fixation (11).

10. Dispositif de fixation (1) selon la revendication 9, **caractérisé par le fait que** l'auxiliaire de comblement (6) est maintenu en applique contre la partie rapportée (4) avec effet de coincement.

11. Dispositif de fixation (1) selon les revendications 9 ou 10, **caractérisé par le fait que** le système de comblement (3) recouvre l'intégralité de l'évidement (5), du type trou oblong, situé dans la partie rapportée (4).

12. Dispositif de fixation (1) selon l'une des revendications 9 à 11, **caractérisé par le fait que** la première surface d'étanchement (13) et la seconde surface d'étanchement (16) du système de comblement (3) préviennent une ascension de la masse durcissable coulante (18) au-delà de l'arête supérieure de l'évidement (5), du type trou oblong, situé dans la partie rapportée (4).
